# EUROPEAN PATENT APPLICATION

(11) **EP 2 479 052 A1**
(43) Date of publication of application: **25.07.2012**
(21) Application number: 11397503.1
(22) Date of filing: 25.01.2011
(51) Int. Cl.: B60K 7/00, B62D 49/06

(54) **Working machine**

(71) Applicant: A&T - Creation Oy, 40530 Jyväskylä (FI)
(72) Inventor: Mäkinen, Tommi, 40420, JYSKÄ (FI); Tiitinen, Arto, 40530, Jyväskylä (FI); Taatila, Seppo, 33880, Lempäälä (FI)
(74) Representative: Rahkonen, Erkki Juhani

(57) **Abstract**

A working machine comprising at least: a frame (2); and one or several wheels (6, 8) which are connected to the frame and by means of which the working machine (1) is arranged to move. The working machine also comprises: one or several electric hub motors (5, 7) arranged in the wheel and utilizing electric energy to drive the wheel; and one or several devices (3a) producing electric energy or components (3b) storing electric energy, or both, wherein said device or component, or both, are arranged to produce electric energy and transmit it to said electric hub motor. In one example at least one work implement (16, 17, 22) is coupled to the working machine and arranged to utilize in its functions the electric energy produced or stored by the working machine.

## Description

The invention relates to a working machine. Furthermore, the invention relates to a method in a working machine.

### Background of the invention

In prior art, various working machines, such as tractors, are based on a motor producing mechanical power and on a mechanical power transmission system. The power transmission system comprises for example a rotating power takeoff shaft and the necessary members by means of which the rotating movement (rotating speed or angular speed) and the torque generated by the motor are transmitted to the wheels that move the working machine. The power transmission system comprises for example the necessary power transmission shafts, switches, gear systems and members by means of which the rotating movement and the torque are transmitted to a desired target in the working machine, for example to the drive wheels or work implements of the working machine itself, or to other devices utilizing the mechanical power generated by the motor.

It is also possible to equip working machines with various kinds of work implements to which the rotating movement and torque are transmitted for example by means of a separate power takeoff shaft. The working machine and the work implement are coupled to each other for example by means of an articulated shaft. The work implements utilize the rotating movement and the torque in the operations of their own. The work implements are typically coupled to the working machine that moves the work implement.

It is also typical that the rotating movement and the torque are utilized for producing hydraulic power, for example by means of a pump. The volume flow and pressure or pressure difference of pressurized medium is utilized for instance in the motors and actuators of working machines. It is possible to transmit hydraulic power to a separate work implement for example by means of hoses coupled between the volume flow of the working machine and the pressure source and the working machine.

Prior art mechanical power transmission system is complex and contains a large number of different components as well as targets of maintenance and repair. Sufficient reliability and strength may also require that the components are large in size and heavy, which is disadvantageous and problematic in view of placing the components. For example a heavy working machine working on a field, especially a tractor, is problematic because of the compaction of the ground. The motor, the power transmission system and the axles or wheels moving the working machine, as well as the different work implements must be coupled to each other mechanically to form a kind of a power transmission chain, and their placement is based on very conventional solutions.

The act of utilizing and transmitting mechanical power in the manner described above does not make it possible to easily adapt such placement of the aforementioned components in the working machine which would enable new structural solutions for working machines, new types of working machines, optimal and even weight distribution or more versatile possibilities than before to implement various work implements.

### Summary of the invention

By means of the solution according to the invention it is possible to avoid problems of prior art.

By means of the presented solution a working machine is implemented which utilizes electric energy in a very versatile manner. The working machine is not equipped with a mechanical power transmission system. The working machine comprises components or devices that produce, store, transmit or utilize electric energy or electric power. Electric power, in other words electric current or its strength and voltage is utilized for example in the drive wheels to move the working machine. If necessary, electric power is also transmitted to the work implements of the working machine itself, and to other devices. It is also possible to transmit electric power to separate work implements, for example by means of cables and necessary couplings, and the work implements utilize the electric current and voltage in their own operations. If necessary, electric power is converted into mechanical power or hydraulic power, either in the working machine or in the work implement.

The working machine is applied especially in agriculture, wherein it is a new type of a tractor, but it can also be adapted in forestry, excavation, firefighting and rescue activities, military applications, working machines used in maintenance and sanitation, or in other applications utilizing different kinds of moving working machines and their work implements.

It is also possible to utilize electric power to produce mechanical power of hydraulic power, wherein in accordance with some examples electric hub motors or hydraulic pumps equipped with an electric motor are utilized.

According to a specific example, a modular structure is implemented in the working machine in question. The modular structure comprises a moving frame or a basic unit to which other modular parts, i.e. modules of the working machine can be fastened. For example only those modules which are necessary in view of the work to be carried out or the working machine to be constructed are selected to be taken in use or to be fastened to the basic unit. It is typical that the modularity is also implemented in such a manner that the module can be fastened to two or several locations in the basic unit. The basic unit contains members that enable fastening the module to at least one, preferably two or several alternative locations. The fastening points in the modules and in the basic unit are standardized, which increases the possibilities of variation.

In the presented solution distributed electric power transmission is implemented, in which typically two or several wheels, for example four wheels are equipped with electric hub motors transforming electric power to the rotating movement and torque of the wheel so that the working machine moves to the desired direction. Electric power transmission comprises at least the necessary components for transmitting and utilizing electric power and control devices controlling the function of the aforementioned components. The different components of electric power transmission are typically separate components, which makes it possible to distribute and place them freely in the working machine and also in the work implement. The different components are connected to each other by means of conductors transmitting electric power, for example flexible cables. The data transmission and control signals are transmitted between the control devices and components by using for example flexible electrical conductors, optical cables or wireless data transmission.

By connecting the basic unit and a sufficient number of modules it is possible to attain for example a moving drive unit, to which different work implements and a cabin can be connected. The work implements are fastened either to the drive unit or they are coupled mechanically to the drive unit so that they can be towed or pushed. The work implement may also comprise one or several wheels utilizing an electric hub motor. The work implement obtains its electric power for example from the drive unit. According to one example the wheels of both the drive unit and the work implement work together and simultaneously as drive wheels. The control unit controls the operation and adjusts the rotating speed and torque of each drive wheel to synchronize the operation in the desired manner and to attain the desired effect. The speed difference of the wheels and/or the difference in their travel direction can be utilized for example in changing the driving direction of the drive unit. For example, the control unit is arranged to synchronize the function of the drive wheels so accurately that a situation is avoided in which wrong rotating speed of a single wheel would decelerate the drive unit or work implement. Said situation occurs both when the drive unit is driven straight forward and when driving curves. Thus, unnecessary use of energy is avoided.

By means of the presented solution it is possible to attain a lighter drive unit when compared to work implements of prior art, as well as better efficiency.

According to one example, the drive unit also comprises components necessary for storing electric energy, for example one or several batteries, capacitors or other devices. Electric energy is discharged in a controlled manner and taken in use in the electric power transmission. Preferably, electric energy can be supplied to the component storing electric energy either from an external source of electric energy, for example from an electric network or generator, or the drive unit itself comprises a device producing electric energy, such as a generator, a fuel cell, or some other device. The device producing electric energy or the component storing electric energy can also be located in the work implement. The device producing electric energy or the component storing electric energy can each alone form a module or they form a module together. The module comprises the necessary couplings or interface components for transmitting electric power and signals. Preferably said module is implemented in such a manner that the coupling is standardized.

The drive unit comprises either a device producing electric energy or a component storing electric energy, or both. Electric power is attained in use for different targets, for example for electric power transmission either from a device producing electric energy or a component storing electric energy, or electric energy is attained from both of them simultaneously. Thus, it is possible to improve the efficiency or to better respond to temporary variations in the demand for electric power. Greater need of power is fulfilled by increasing the number of aforementioned modules.

According to one example, the drive unit also comprises a cabin, which is for example a separate module. The cabin contains the necessary control devices and members to control the movement and driving direction of the drive unit, as well as the operation of other work implements or modules contained in the drive unit or fastened or coupled thereto. The drive unit is equipped with members enabling the fastening of the cabin to at least one, but preferably to two or several alternative locations. According to one example said members comprise a rail or a guide via which the cabin is capable of moving along the drive unit. In one example, the cabin is placed in the work implement, which, in turn, is coupled to the drive unit.

According to another example, the cabin is located apart from the drive unit. Thus, the cabin can stand in its place in a stationary manner while the drive unit moves and works by means of remote control. The necessary devices for remote control are positioned in the cabin. The drive unit, the work implement or the module is connected wirelessly with the control devices and members of the cabin. The remote control is connected to one or several control devices of the drive unit, work implement or module that controls the operations. Preferably, the cabin also comprises components necessary for storing electric energy, for example one or several batteries, capacitors or other devices. The cabin utilizes electric power in its operations, said power being obtained from the aforementioned component. Electric energy is supplied to the aforementioned component from an external source, drive unit or even from the work implement when the cabin is coupled to the drive unit or work implement by means of an electric cable. The cabin, which is used separately, can be fastened to the drive unit or to the work implement for transfers or for loading electric energy.

The device producing electric energy and the component storing electric energy form either one joint module or two separate modules which can also be fastened to at least one location in the drive unit or work implement.

The locations in which the modules are fastened preferably comprise such electric couplings or interface components and if necessary, mechanical fastening members as well, which also make it possible to fasten different modules having different operations in the same location. Thus, it is possible to position certain functions of the working machine to such a location which is most optimal in view of the work to be carried out. Thus, it is possible to fasten for example the cabin close to the work implement or even to the work implement itself, so that the visibility to the work at hand would be unobstructed. Thus, different types of working machines become possible. The advantages include versatile uses of the working machine, increase in efficiency and possibility to increase the operating time of the working machine.

It is possible to connect two or several drive units mechanically to each other so that one working machine is formed, which is provided with higher amount of electric energy, for example for a hard task. If necessary, the drive units are coupled to each other for example by means of cables to transmit electric power or to perform data transmission. Thus, the control device of one working machine controls the function of other drive units in a centralized manner and at the same time it is also possible to apply remote control, using either a separate cabin or a cabin placed in only one drive unit. The aforementioned centralized controlling and remote control is also possible in a situation where the drive units are not coupled to each other mechanically, but their cooperation is synchronized so that the desired movement, function or task would be completed. In the latter alternative it is also possible that two or several drive units are coupled mechanically to the same work implement, but apart from each other. In the above alternatives each drive unit may perform certain parts of a desired task independently.

According to one example, one or several modules are fastened to the drive unit, said module comprising a drive wheel with an electric hub motor. The wheel of the module is controlled electrically together with the other wheels of the drive unit. Preferably, the rotating speed and torque of each wheel can be controlled independently. Corresponding wheel module can also be applied in a work implement. If necessary, the wheel of the work implement is controlled electrically together with the wheels of the drive unit.

If necessary, the drive unit can also function in different worksites as a moving unit that produces electric energy or as a unit for reserve power.

The working machine according to the invention is presented in claim 1. The method according to the invention in a working machine is presented in claim 15.

In the act of implementing the above-described parts, devices, components, interfaces, couplings, modules, control units, control devices and structures and constructions it is possible to apply and modify technical solutions known as such which are available for a person skilled in the art. On the basis and with the help of the instructions presented hereinabove and detailed examples presented hereinbelow it is possible to modify said technical solutions so that when combined in a suitable manner they implement the desired working machine or work implement and their functions. Especially in the presented working machine it is possible to apply features which are in use also in tractors or agricultural working machines and work implements of prior art, which are, however, equipped with for example mechanical power transmission.

### Brief description of the drawings

In the following, the invention and the presented solutions and examples will be described in more detail by reference to the appended drawings, in which:
Fig. 1 shows a working machine according to one example as well as its parts in a top view,
Fig. 2 shows a working machine according the example of Fig. 1 as well as its parts in a side view, and
Fig. 3 shows a working machine according another example, as well as its parts and a work implement in a side view.

### Detailed description of the invention

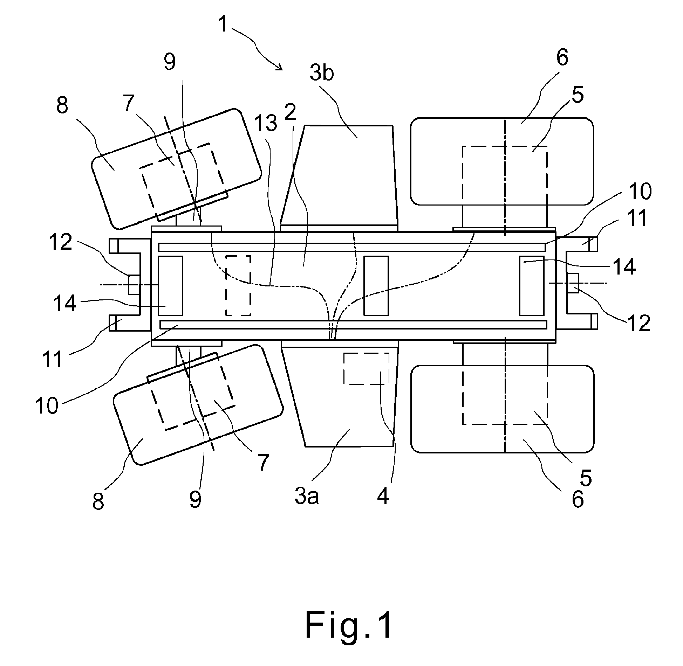

Fig. 1 shows a working machine according to one embodiment, based on the presented solution. This is especially an example of the structure of the drive unit and the modules and work implements connected or to be connected thereto.

The drive unit 1 comprises a frame 2, to which the other modules and other necessary parts can be connected. The frame 2 forms a kind of a basic unit or module. The frame 2 comprises two wheel modules connected to one of its ends. Each wheel module comprises one wheel 6 and an electric hub motor 5 belonging to the same and driving the wheel 6. According to one example the wheel module also comprises the necessary electric control devices for control and adjustment, and preferably also a frequency converter of the electric motor. The wheel module comprises members by means of which it can be fastened to a desired location in the frame 2 or in the work implement. In addition, the wheel module comprises electric coupling members for transmitting electric power.

The frame 2 also comprises two wheel modules connected to its other, opposite end. Each wheel module comprises one wheel 8 and an electric hub motor 7 belonging to the same and driving the wheel 8. The structure of the wheel module corresponds to the wheel module presented above, but with such a difference that the hub motor 7 and the wheel 8 are fastened to the wheel module by means of mechanical members 9 that enable turning the wheels and thus to change the travelling direction. In another alternative example, all wheels of the drive unit 1 are turnable. It is typical that four or more wheel modules are fastened to the frame 2. It is typical that one or more wheel modules are fastened to the work implement.

According to an alternative example the module that comprises two wheels and electric hub motors belonging to them, and if necessary also the aforementioned mechanical members for turning, can be attached to the frame 2 or another corresponding two-wheel wheel module. By means of one such module it is possible to attain a wheel pair corresponding to Fig. 1. Thus, it is possible to increase the number of wheels in the drive unit. Corresponding structure is attained by fastening two one-wheel modules to such a connecting module which, in turn, is fastened to the end of the frame 2. Preferably, it is also possible to fasten for example an electric or mechanical power takeoff to the end of said connecting module, said power takeoff being typically fastened to the end of the frame 2.

The module is fastened to another module, work implement or frame 2, using the connecting members in the module and in the frame, which are preferably standardized in view of the placement and dimensioning. Said connecting members enable positioning different modules in the same location, even if different modules would have different functions and purpose of use. Some of the connecting members and locations in the frame, work implement or module may of course be reserved for a certain type of a module or auxiliary device.

The drive unit comprises at least one electric power takeoff, which is preferably a module that can be connected to the frame 2. Preferably, the power takeoff can be positioned on both ends of the frame 2 or the drive unit, as shown in Fig. 1. According to one example, the power takeoff comprises mechanical fastening members 11 by means of which the work implement can be fastened to the drive unit 1 and/or electric coupling members 12 by means of which it is possible to transfer electric power for example to the work implement to which the connecting members 12 have been connected for example by means of a cable. In one example the electric coupling members 12 are arranged to enable the transfer of electric power also to the opposite direction, from the work implement to the drive unit.

Alternatively, the drive unit comprises at least one mechanical power takeoff, which is preferably a module that can be connected to the frame 2. Preferably, the power takeoff can be positioned on both ends of the frame 2 or the drive unit. According to one example, the power takeoff comprises mechanical fastening members by means of which the work implement can be fastened to the drive unit 1 and/or mechanical coupling members by means of which it is possible to transfer mechanical power for example to the work implement to which the coupling members have been connected for example by means of an articulated shaft. The mechanical coupling members correspond for example to a conventional three-point fastening. The mechanical power takeoff transforms the obtained electric energy into mechanical power and transmits it to the work implement for example by means of a power takeoff shaft. This is for example a conventional rotating power takeoff shaft. According to one example, the module that forms the mechanical power takeoff can also be positioned in the work implement.

As a module it is also possible to implement an apparatus that transfers the obtained electric energy into hydraulic or pneumatic power. It is possible to couple an actuator, a pressurized medium system or module utilizing the volume flow and pressure of the pressurized medium. The module may be located in the drive unit or in the work implement.

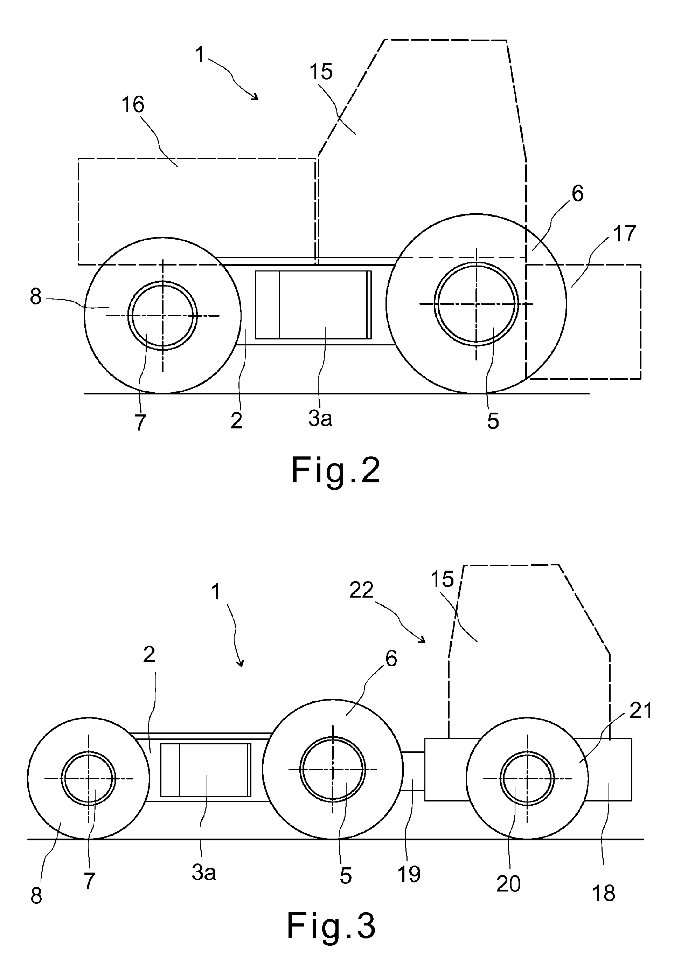

In the example of Fig. 1 the drive unit 1 comprises fastening members 10 placed on top of the frame 2, which enable for example placing the cabin 15 or the module 16 in a desired location on top of the frame 2 and fastening of the same on top of the frame 2 as shown in Fig. 2. The module 16 as well as the module 17 placed on the end of the frame 2 may be for example a work implement. In one example the fastening members 10 function as a track along which the cabin 15 can be transferred to a desired location in frame 2 for example by means of an electric actuator. The location of the cabin 15 is selected on the basis of the task to be carried out. According to one example the fastening members 10 are implemented as a one or several rails or guides, along which the cabin 15 moves or rolls. Additionally or alternatively, the fastening members 10 allow removing, turning or fastening the cabin 15 back again so that the desired direction of the cabin is attained. In Fig. 2 the cabin may be directed either to the right or to the left. The travel direction of the work implement may be to the left or to the right. Said rail or guide is located on top of the frame, it extends horizontally and in parallel to the longitudinal direction of the drive unit 1. The cabin can be transferred either between the ends of the drive unit or between the central part and one end of the drive unit.

A sufficient number of electric coupling members 14 are placed in the frame 2, work implements and modules, to make it possible to transfer for instance electric power for example to the work implement, cabin or another module. The transfer of electric power from the work implement to the frame 2 and to one of its modules is also necessary in some cases, for example when there is a great need for electric power. Said coupling members are preferably standardized, wherein they are identical and it is possible to connect modules of very different types in them.

According to Fig. 2, at least one device producing electric energy is placed in the unit 3a and fastened in its place on the side of the frame 2 between the wheels 6 and 8. Thus, a low structure is attained. According to one example, the unit 3a comprises a combustion engine, for example a diesel engine, as well as a generator coupled thereto that produces electric power. According to another example the unit 3a comprises a fuel cell producing electric energy. Another device producing electric energy can be placed in the unit 3b, which is located on the opposite side of the frame 2 in accordance with Fig.1, placed on the side of the frame 2 between the wheels 6 and 8. The number and dimensioning of devices producing electric energy depends on the planned need for electric energy. The unit 3a can be removed for maintenance or replacement. Another device producing electric energy may also be placed on top of the frame 2, for example in the module 16, or even in the work implement 22 shown in Fig. 3.

According to Fig. 1 at least one component storing electric energy is placed in the unit 3b. According to one example the unit 3a comprises a battery or a capacitor storing electric energy. Another component that stores electric energy may be placed in the unit 3a. The number and dimensioning of components storing electric energy depends on the planned need for electric energy. The unit 3b can be removed for maintenance or replacement. Another component that stores electric energy may also be placed on top of the frame 2, for example in the module 16, or even in the work implement 22 shown in Fig. 3.

Figure 3 shows an alternative example of the combination of the drive unit 1 and the working device 22. The work implement 22 comprises a basic unit or frame 18, to which modules can be connected in a manner complying with the frame 2 of the working machine and its electrical and mechanical couplings. In the example of Fig. 3, two one-wheel modules are fastened to the frame 18, each of them comprising a wheel 21 and an electric hub motor 20 belonging to the same. The structure of the wheel module may correspond to the wheel module of the working machine and in the work implement it is possible to apply the above-described connecting module intended for the wheel modules. The frame 18 comprises the members, devices and components that perform functions characteristic to said work implement.

The work implement 22 is fastened to the frame 2 of the working machine, using for example a coupling member 19 which can also be implemented as a module. The work implement 22 is fastened for example to the power takeoff of Fig. 1 and to its electric coupling members 12, using for example a cable. In this example the cabin 15 is placed in the work implement 22.

It is possible to place other components required by the drive unit 1 inside the frame 2. The cables 13 illustrate the transmission of data, signals and electric power between the modules and the different units. It is possible to control the function of the drive unit 1, the modules and the units by means of one or several electric control units or control devices, which are illustrated by means of a control device 4, which can be placed for example in the frame 2 or in the unit 3a or 3b. If necessary, the control device controlling the operation can be implemented as module and placed for example on top of the frame 2.

The above-mentioned control devices and units, components and cables to be placed inside the frame of the drive unit, can also be placed inside the frame of the work implement. It is typical that the work implement comprises one or several one-wheel modules. Examples of different work implements include various load-carrying devices, soil working devices or devices collecting, handling and processing plants growing on the ground.

The invention is not restricted solely to the examples presented above and to the embodiments shown in the figures, but it may also be implemented in accordance with the definitions disclosed in the appended claims.

## Claims

1. A working machine comprising at least:
- a frame (2), and
- one or several wheels (6, 8) which are connected to the frame and
by means of which the working machine (1) is arranged to move;
**characterized in that** the working machine further comprises:
- one or several electric hub motors (5, 7) arranged in the wheel and utilizing electric energy to drive the wheel; and
- one or several devices (3a) producing electric energy or components (3b) storing electric energy, or both, wherein said device or component, or both, are arranged to produce electric energy and to transmit it to said electric hub motor.

2. The working machine according to claim 1, **characterized in that** the working machine also comprises a cabin (15); and fastening members (10) placed on top of the frame (2) and arranged to function as a track along which said cabin (15) can be transferred along the frame (2) to the desired location.

3. The working machine according to claim 1 or 2, **characterized in that** the device (3a) producing electric energy or the component storing electric energy (3b) or both, are placed in a unit (3a, 3b) located on the side of the frame (2), in which also two wheels (6, 8) of the working machine are located, wherein said unit is positioned between said two wheels.

4. The working machine according to any of the claims 1 to 3, **characterized in that** the working machine comprises at least one electric power takeoff comprising electric coupling members (12) arranged to transmit the produced and stored electric power between the drive unit and the work implement coupled to the power takeoff.

5. The working machine according to any of the claims 1 to 3, **characterized in that** the working machine comprises at least one mechanical power takeoff comprising mechanical coupling members arranged to transmit the mechanical power produced by the working machine to those work implements which are coupled to the power takeoff, and said mechanical power takeoff is also arranged to transform the electric power produced by the working machine into mechanical power.

6. The working machine according to claim 4 or 5, **characterized in that** said power takeoff (12) is a module that can be connected both to the first end of the frame (2) and to the opposite, second end of the frame.

7. The working machine according to any of the claims 1 to 4, **characterized in that** said wheel and its electric hub motor form a one-wheel wheel module that can be connected to the frame (2).

8. The working machine according to any of the claims 1 to 7, **characterized in that** the working machine comprises at least one electric coupling member (14) placed in the frame or in a device connected to the frame or in a module, having preferably a standardized structure and enabling the transmission of the produced or stored energy.

9. The working machine according to any of the claims 1 to 8, **characterized in that** said device (3a) producing electric energy comprises a fuel cell or a combustion engine, as well as a generator coupled thereto; and said component (3b) storing electric energy comprises a battery and/or a capacitor.

10. The working machine according to any of the claims 1 to 9, c**haracterized** in that the working machine also comprises a cabin (15) which can be coupled to the frame (2) and/or placed apart from the working machine, wherein the necessary devices for remote control are placed in the cabin; and said devices for remote control are arranged to control the frame and the devices, work implements or modules connected thereto.

11. The working machine according to any of the claims 1 to 10, **characterized in that** a module is connected to the working machine, which is arranged to transform the electric power produced by the working machine into hydraulic energy, wherein said module is also arranged to function as a source for the volume flow of pressurized medium and pressure.

12. The working machine according to any of the claims 1 to 11, **characterized in that** said working machine is arranged to move on the basis of the electric power transmitted to one or several electric hub motors of the wheel, without the transmission of mechanical power or without a power transmission system intended for mechanical power transmission.

13. The working machine according to any of the claims 1 to 12, **characterized in that** at least one work implement (16, 17, 22) is connected to the working machine and arranged to utilize in its functions the electric energy produced or stored by the working machine.

14. The working machine according to claim 13, **characterized in that** said working machine comprises one or several wheels (21) by means of which the work implement is arranged to move and one or several electric hub motors (20) arranged in the wheel and utilizing electric energy to drive the wheel.

15. A method in a working machine, wherein the working machine comprises at least: a frame (2) and one or several wheels which are connected to the frame and by means of which the working machine (1) is arranged to move; **characterized in that** the working machine also comprises one or several electric hub motors (5, 7) arranged in the wheel and utilizing electric energy to drive the wheel; and one or several devices (3a) producing electric energy or components (3b) storing electric energy, or both, and in the method said device and component, or both, produce electric energy and transmit it to said electric hub motor.
